# EUROPÄISCHE PATENTSCHRIFT

(11) **EP 3 568 606 B1**
(45) Veröffentlichungstag und Bekanntmachung des Hinweises auf die Patenterteilung: **06.01.2021**
(21) Anmeldenummer: 17751601.0
(22) Anmeldetag: 19.07.2017
(51) Int. Cl.: F16D 25/0638, F16D 25/10, F16D 25/12, F16D 48/06, F16D 21/06

(54) **HYBRIDMODUL FÜR EIN KRAFTFAHRZEUG SOWIE ANTRIEBSSTRANG MIT HYBRIDMODUL**
HYBRID MODULE FOR A MOTOR VEHICLE, AND DRIVE TRAIN HAVING A HYBRID MODULE
MODULE HYBRIDE POUR UN VÉHICULE À MOTEUR ET CHAÎNE CINÉMATIQUE DOTÉE D'UN MODULE HYBRIDE

(30) Priorität: 13.01.2017 DE 102017100578; 03.03.2017 DE 102017104487
(43) Veröffentlichungstag der Anmeldung: 20.11.2019
(73) Patentinhaber: Schaeffler Technologies AG & Co. KG, 91074 Herzogenaurach (DE)
(72) Erfinder: LEHMANN, Steffen, 76275 Ettlingen (DE); TRINKENSCHUH, Andreas, 77815 Bühl (DE); LORENZ, Elmar, 77836 Rheinmünster Söllingen (DE)
(86) Internationale Anmeldenummer: PCT/DE2017/100597
(87) Internationale Veröffentlichungsnummer: WO 2018/130236

(56) Entgegenhaltungen:
- EP-A1- 2 573 415
- DE-A1-102005 040 771
- JP-A- 2006 298 272
- US-A1- 2006 144 665

## Beschreibung

Die vorliegende Erfindung betrifft ein Hybridmodul für einen Antriebsstrang eines Kraftfahrzeuges, wie ein Pkw, ein Lkw, ein Bus oder ein sonstiges Nutzfahrzeug, mit einer einen Stator und einen Rotor aufweisenden elektrischen Maschine, einem zumindest ein Drehteil / Schwungteil aufweisenden Drehschwingungsdämpfer sowie einer integrierten und als Doppelkupplung ausgebildeten Kupplungseinrichtung. Das Hybridmodul weist somit eine integrierte Doppelkupplung auf. Zudem betrifft die Erfindung eine Antriebsstrangeinheit mit diesem Hybridmodul sowie einer Brennkraftmaschine, wie einem Diesel- oder Ottomotor.

Aus der WO 2010/ 127 663 A1 ist ein koaxial angeordnetes Hybridmodul ohne Trennkupplung bekannt. Bei diesem Hybridmodul ist ein Rotor einer elektrischen Maschine an eine Primärmasse eines Drehschwingungsdämpfers, der ein Zweimassenschwungrad und ein Fliehkraftpendel aufweist, gekoppelt. Eine Doppelkupplung ist radial innerhalb der elektrischen Maschine und weiterhin mindestens teilweise axial innerhalb der elektrischen Maschine angeordnet.

Des Weiteren ist aus der WO 2014/ 026 685 A1 ein Hybridmodul mit Trennkupplung für einen Antriebsstrang eines Kraftfahrzeuges bekannt.

Bezüglich weiteren Standes der Technik wird auf die DE 10 2005 040771 A1 und die US 2006/144665 A1 verwiesen.

Als Nachteil bei den aus dem Stand der Technik bekannten Ausführungen hat es sich jedoch herausgestellt, dass Hybridmodule häufig relativ aufwändig montierbar sowie aufgebaut sind. Dies wird durch den Einsatz von Doppelkupplungen verstärkt.

Es ist daher die Aufgabe der vorliegenden Erfindung, die aus dem Stand der Technik bekannten Nachteile zu beheben und insbesondere ein Hybridmodul zur Verfügung zu stellen, das einerseits im Aufbau möglichst wenig Bauraum einnimmt, andererseits möglichst einfach strukturiert ist.

Dies wird erfindungsgemäß durch die Merkmale des Anspruchs 1 gelöst, wobei das Kennzeichen beinhaltet, dass ein den Rotor aufnehmender Rotorträger direkt über eine permanente / dauerhafte Drehverbindung mit dem zumindest einen Drehteil verbunden ist, wobei der Rotorträger einen Kupplungsbestandteil zumindest einer Teilkupplung der Kupplungseinrichtung ausbildet.

Dadurch wird ein Hybridmodul mit einer integrierten Doppelkupplung umgesetzt, die einerseits besonders kompakt, andererseits durch den Einsatz möglichst weniger einzelner Kupplungen einfach im Aufbau gehalten ist. Mit andern Worten ausgedrückt, weist ein erfindungsgemäßes Hybridmodul somit eine integrierte Doppelkupplung auf. Das Hybridmodul ist (im Betrieb im Antriebsstrang) zwischen einer Brennkraftmaschine und einem Doppelkupplungsgetriebe angeordnet. Ein Rotor der elektrischen Maschine ist bevorzugt mit einer Sekundärmasse des Drehschwingungsdämpfers gekoppelt / verbunden und nimmt ein Drehmoment von der Brennkraftmaschine auf.

Weitere vorteilhafte Ausführungsformen sind in den Unteransprüchen beansprucht und nachfolgend näher erläutert.

Weiter ist es vorteilhaft, wenn der Drehschwingungsdämpfer ein, eine Primärmasse ausbildendes, erstes Drehteil sowie ein, eine Sekundärmasse ausbildendes, zweites Drehteil aufweist, wobei die beiden Drehteile relativ zueinander um einen bestimmten Verstellbereich verdrehbar sind und die (permanente) Drehverbindung zwischen dem zweiten Drehteil sowie dem Rotorträger ausgebildet / vorgesehen ist. Dies bedeutet, dass der Rotorträger mittels der (permanenten) Drehverbindung mit dem zweiten Drehteil / der Sekundärmasse dauerhaft (im Betrieb des Hybridmoduls nicht entkoppelbar) verbunden ist.

Diesbezüglich ist es weiterhin zweckmäßig, wenn das erste Drehteil (unmittelbar) zum drehfesten Anbringen / Anbinden an eine Ausgangswelle (Kurbelwelle) einer Brennkraftmaschine vorbereitet ist, sodass das durch den Rotorträger über das erste Drehteil sowie das zweite Drehteil ein Drehmoment von der Brennkraftmaschine aufnehmbar ist.

Auch von Vorteil ist es, wenn der Drehschwingungsdämpfer durch Kombination eines Bogenfederdämpfers und eines drehzahladaptiven Tilgers (Tilger vorzugsweise ein Fliehkraftpendel) ausgebildet ist. Dadurch ergeben sich besonders geschickte Ausführungen hinsichtlich des Drehschwingungsdämpfers.

Ist die elektrische Maschine fluidgekühlt, d.h. ist die elektrische Maschine mittels einer Kühleinrichtung, bevorzugt einer Flüssigkeitskühleinrichtung, wie einer Wasserkühleinrichtung, gekühlt, ist eine weitere Wirkungsgradsteigerung der elektrischen Maschine trotz des beengten Bauraums realisiert. Insbesondere ist es bevorzugt, dass die Kühleinrichtung zum direkten Umströmen des Stators mit Kühlfluid ausgebildet ist.

Wenn die Drehverbindung als eine Steckverzahnung ausgebildet ist, wird die Montagefreundlichkeit des Hybridmoduls weiter gesteigert.

Des Weiteren ist es vorteilhaft, wenn die Doppelkupplung fluidgekühlt, vorzugsweise flüssigkeits- / hydraulikgekühlt, weiter bevorzugt ölgekühlt, ist, wobei eine Fluidverteilereinheit vorhanden ist, die zum Lagern des Rotorträgers (vorzugsweise relativ zu einer Getriebeeingangswelle) dient.

In diesem Zusammenhang ist es zudem zweckmäßig, wenn ein Betätigungskolben jeweils einer Teilkupplung der Doppelkupplung in / an der Fluidverteilereinheit vorgesehen ist / in diese integriert ist. Des Weiteren ist es bevorzugt, dass ein Fluidrücklauf (Hydraulikmittel- / Ölrücklauf) in einem gehäusefesten Bestandteil oder einem Gehäuse des Hybridmoduls direkt integriert ist. Dadurch ergibt sich eine noch kompaktere Bauweise.

Ist die Doppelkupplung mit einer separat steuerbaren Fluidkühlung versehen, wird die Effizienz des Antriebsstranges, in dem das Hybridmodul bevorzugt eingesteckt ist, weiter gesteigert.

Des Weiteren ist es vorteilhaft, wenn ein eine Drehstellung des Rotors (im Betrieb) erfassender Rotorlagesensor und/oder ein eine Temperatur im Hybridmodul (im Betrieb) erfassender Temperatursensor vorgesehen sind / ist.

Des Weiteren betrifft die Erfindung einen Antriebsstrang für ein Kraftfahrzeug, mit dem erfindungsgemäßen Hybridmodul nach zumindest einer der zuvor beschriebenen Ausführungen sowie mit einer Brennkraftmaschine, wobei eine Ausgangswelle der Brennkraftmaschine (vorzugsweise permanent) drehfest mit dem Drehschwingungsdämpfer verbunden ist.

Diesbezüglich ist es wiederum zweckmäßig, wenn die Ausgangswelle der Brennkraftmaschine (vorzugsweise permanent) drehfest mit dem ersten Drehteil des Drehschwingungsdämpfers verbunden ist. Der Rotorträger ist mittels der Doppelkupplung mit einer von zwei Getriebeeingangswellen eines Doppelkupplungsgetriebes bevorzugt verbindbar.

In anderen Worten ausgedrückt, ist somit erfindungsgemäß ein Hybridmodul mit einer integrierten Doppelkupplung umgesetzt. Das Hybridmodul ist bevorzugt zwischen einer Brennkraftmaschine und einem Doppelkupplungsgetriebe im Antriebsstrang angeordnet. Ein Drehschwingungsdämpfer, der eine Kombination eines Bogenfederdämpfers sowie eines drehzahlabhängigen Vibrationstilgers darstellt, ist mit einer Kurbelwelle verbunden. Ein Rotor einer elektrischen Maschine ist mit einer Sekundärmasse des Drehschwingungsdämpfers verbunden und nimmt dadurch im Betrieb von der Brennkraftmaschine Drehmoment auf. Bevorzugt ist das Hybridmodul ein P1-Hybridmodul (Drehachsen des Rotors sowie der Teilkupplungen der Kupplungseinrichtung koaxial zueinander) ohne Trennkupplung (zwischen der Brennkraftmaschine und der elektrischen Maschine), um die Brennkraftmaschine von dem Antriebsstrang abzutrennen (d.h., die Brennkraftmaschine ist im Betrieb permanent mit der elektrischen Maschine gekoppelt).

Die vorliegende Erfindung wird nun nachfolgend anhand von verschiedenen Figuren in Verbindung mit einem bevorzugten Ausführungsbeispiel näher beschrieben.

Es zeigen:
- Fig. 1: eine Längsschnittdarstellung eines erfindungsgemäßen Hybridmoduls nach einem bevorzugten Ausführungsbeispiel, wobei das Hybridmodul bereits mit Getriebeeingangswellen eines Doppelkupplungsgetriebes wirkverbunden ist,
- Fig. 2: eine Detailansicht der Längsschnittdarstellung nach Fig. 1 in einem Bereich zweier Teilkupplungen einer als Doppelkupplung ausgebildeten Kupplungseinrichtung sowie eines Rotorträgers eines Rotors einer elektrischen Maschine des Hybridmoduls,
- Fig. 3: eine Längsschnittdarstellung des Hybridmoduls der Fig. 1, wobei ein Betätigen einer ersten Teilkupplung der Doppelkupplung veranschaulicht ist,
- Fig. 4: eine Längsschnittdarstellung des Hybridmoduls ähnlich zu Fig. 1, wobei nun das Betätigen einer zweiten Teilkupplung der Doppelkupplung veranschaulicht ist,
- Fig. 5: eine Längsschnittdarstellung des Hybridmoduls ähnlich zu Fig. 1, wobei ein zur Kühlung der ersten Teilkupplung dienender Kühlfluidstrom veranschaulicht ist,
- Fig. 6: eine Längsschnittdarstellung des Hybridmoduls ähnlich zu Fig. 1, wobei ein zur Kühlung der zweiten Teilkupplung dienender Kühlfluidstrom veranschaulicht ist, und
- Fig. 7: eine Längsschnittdarstellung des Hybridmoduls ähnlich zu Fig. 1, wobei ein Ableiten eines Kühlfluids aus dem Inneren des Hybridmoduls, an einem Stator der elektrischen Maschine vorbei, veranschaulicht ist.

Die Figuren sind lediglich schematischer Natur und dienen ausschließlich dem Verständnis der Erfindung. Die gleichen Elemente sind mit denselben Bezugszeichen versehen.

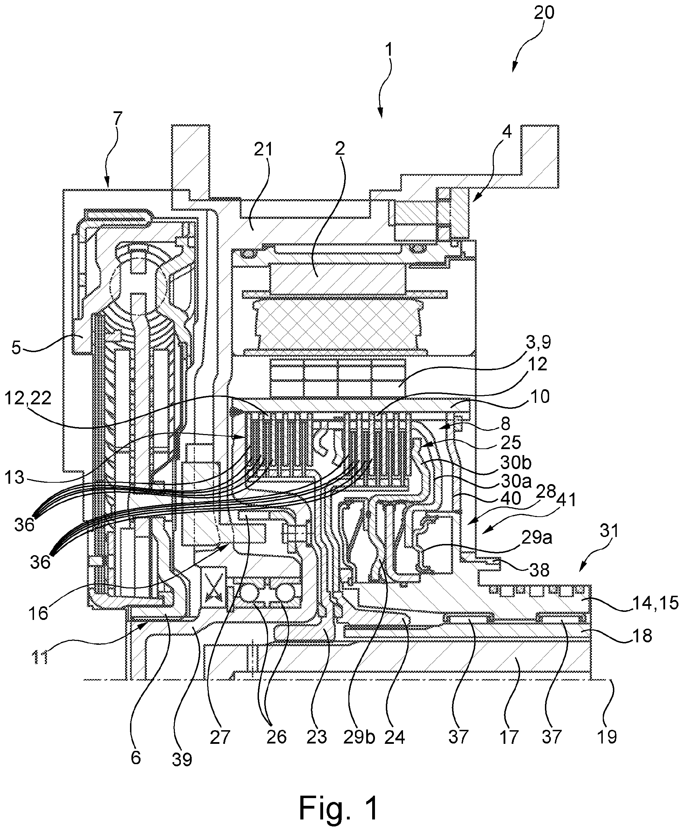

In Fig. 1 ist ein bevorzugtes Ausführungsbeispiel des erfindungsgemäßen Hybridmoduls 1 in seiner Gesamtheit veranschaulicht. Das Hybridmodul 1 ist auf typische Weise eine Kombination aus einer Kupplungsanordnung und einer elektrischen Maschine 4 (Elektromotor). Das Hybridmodul 1 ist in Fig. 1 bereits in einem teilweise dargestellten Antriebsstrang 20 eines Kraftahrzeuges eingesetzt. Das Hybridmodul 1 ist mit einem Getriebe in Form eines Doppelkupplungsgetriebes, das hier ebenfalls nicht weiter dargestellt ist, verbunden. Insbesondere ist das Hybridmodul 1 bereits mit zwei Getriebeeingangswellen 17 und 18 des Getriebes gekoppelt. Des Weiteren ist das Hybridmodul 1 in einem Betrieb mit einer Brennkraftmaschine / einem Verbrennungsmotor, die / der hier der Übersichtlichkeit halber nicht dargestellt ist, gekoppelt. Das Hybridmodul 1 ist als ein P1-Hybridmodul ausgeführt. Bei einem solchen P1-Hybridmodul 1 ist ein Rotor 3 der elektrischen Maschine 4 mit seiner Drehachse koaxial zu einer zentralen Drehachse 19 des Hybridmoduls 1 / einer Kupplungseinrichtung 8 des Hybridmoduls 1 angeordnet. Die in dem Hybridmodul 1 vorhandene Kupplungseinrichtung 8, die hier als eine Doppelkupplung ausgebildet ist, ist in radialer Richtung innerhalb des Rotors 3 angeordnet. Die elektrische Maschine 4 ist in dieser Ausführung an ein 48V-Bordnetz angeschlossen.

Neben der Kupplungseinrichtung 8 weist das Hybridmodul 1 einen Drehschwingungsdämpfer 7 auf. Dieser Drehschwingungsdämpfer 7 weist wiederum zwei Drehteile 5 und 6 auf, die jeweils eine Schwungmasse ausbilden. Insbesondere ist ein erstes Drehteil 5 als Primär(-schwung-)masse ausgebildet und ist im Betrieb an einer Ausgangswelle / Kurbelwelle der Brennkraftmaschine drehfest angebracht. Ein zweites Drehteil 6 ist als Sekundär(-schwung-)masse ausgeführt. Das zweite Drehteil 6 ist zwar drehfest mit dem ersten Drehteil 5 verbunden, jedoch um einen gewissen Verdrehbereich / Verstellbereich relativ zu dem ersten Drehteil 5 in Umfangsrichtung verlagerbar / verdrehbar. Das erste Drehteil 5 ist relativ zu dem zweiten Drehteil 6 schwingungsgedämpft angeordnet. Der Schwingungsdämpfer 7 bildet insbesondere eine Art Zweimassenschwungrad aus. Des Weiteren bildet der Drehschwingungsdämpfer 7 einen Bogenfederdämpfer aus, der mehrere in Umfangsrichtung zwischen dem ersten Drehteil 5 und dem zweiten Drehteil 6 eingespannte Bogenfedern aufweist. Die Bogenfedern werden im Betrieb, in Abhängigkeit der auf die beiden Drehteile 5, 6 wirkenden Schwingungen / Drehschwankungen, in dem Verdrehbereich des ersten Drehteils 5 relativ zu dem zweiten Drehteil 6 federelastisch komprimiert. Des Weiteren ist der Drehschwingungsdämpfer 7 so ausgebildet, dass er gesamtheitlich einen drehzahladaptiven Tilger ausbildet. Dieser Tilger wirkt wiederum wie ein Fliehkraftpendel.

Die elektrische Maschine 4 des Hybridmoduls 1 weist neben dem Rotor 3 einen Stator 2 auf, der fest in einem Modulgehäuse 21 angebracht / aufgenommen ist. Der Stator 2 ist gesamtheitlich ringförmig ausgebildet, wobei radial innerhalb des Stators 2 der im Wesentlichen ebenfalls ringförmig ausgebildete Rotor 3 angeordnet ist. Der Rotor 3 ist hierbei mittels eines Rotorträgers 10 drehbar gelagert bzw. aufgenommen. Der Rotorträger 10 ist als ein im Wesentlichen topfförmiges Tragelement ausgebildet und nimmt an einem radial außen angeordneten Hülsenbereich 22 eine den Rotor 3 ausbildende Rotorspule 9 auf. Die Rotorspule 9 ist beispielsweise durch ein Blechpaket gebildet.

Auch dient der Rotorträger 10 als Kupplungsbestandteil der Kupplungseinrichtung 8. Der Rotorträger 10 bildet insbesondere einen ersten Kupplungsbestandteil 12 aus, der wahlweise mit einem weiteren zweiten Kupplungsbestandteil 23 einer ersten Teilkupplung 13 der Doppelkupplung 8 oder mit einem weiteren zweiten Kupplungsbestandteil 24 einer zweiten Teilkupplung 25 der Doppelkupplung 8 verbindbar ist. Die Doppelkupplung 8 ist als Reibungskupplung ausgeführt. Somit ist jede Teilkupplung 13 und 25 als Reibungskupplung ausgebildet. Insbesondere sind die beiden Teilkupplungen 13 und 25 jeweils als Reiblamellenkupplungen ausgebildet. Zudem ist die Doppelkupplung 8 / sind die Teilkupplungen 13 und 25 jeweils nass laufend ausgebildet. Jedoch ist die Doppelkupplung 8 prinzipiell in weiteren Ausführungen auch trockenlaufend ausgeführt. Der Rotorträger 10 bildet daher sowohl einen ersten Kupplungsbestandteil 12 der ersten Teilkupplung 13 als auch einen ersten Kupplungsbestandteil 12 der zweiten Teilkupplung 25 aus.

Der erste Kupplungsbestandteil 12 der jeweiligen Teilkupplung 13, 25 ist an dem Hülsenbereich 22 des Rotorträgers 10 an einer radial der Rotorspule 9 abgewandten Seite ausgebildet. Somit ist der erste Kupplungsbestandteil 12 an einer radialen Innenseite des Hülsenbereiches 22 ausgebildet. Jeder Kupplungsbestandteil 12 ist zudem mit mehreren als Reiblamellen ausgebildeten Reibelementen 36 ausgestattet. In einem ersten axialen Abschnitt des Hülsenbereiches 22 sind die der ersten Teilkupplung 13 zugeordneten Reibelemente 36 und in einem, axial beabstandet zu dem ersten axialen Abschnitt angeordneten, zweiten axialen Abschnitt des Hülsenbereiches 22 sind die der zweiten Teilkupplung 25 zugeordneten Reibelemente 36 angeordnet und drehfest an dem Rotorträger 10 aufgenommen. Zwischen zwei benachbarten Reibelementen 36 an dem ersten Kupplungsbestandteil 12 der jeweiligen Teilkupplung 13, 25 ragt auf typische Weise ein Reibelement 36 an einem zweiten Kupplungsbestandteil 23 oder 24 der jeweiligen Teilkupplung 13, 25 hinein. Die beiden zweiten Kupplungsbestandteile 23 und 24 sind wiederum topfförmig ausgebildet. Der zweite Kupplungsbestandteil 23 der ersten Teilkupplung 23 ist mit einer als Vollwelle ausgeführten ersten Getriebeeingangswelle 17 und der zweite Kupplungsbestandteil 24 der zweiten Teilkupplung 24 mit einer radial außerhalb der ersten Getriebeeingangswelle 17 angeordneten, als Hohlwelle ausgeführten, zweiten Getriebeeingangswelle 18 verbunden.

Des Weiteren ist der Rotorträger 10 erfindungsgemäß mit dem zweiten Drehteil 6 direkt über eine permanente Drehverbindung 11 verbunden. Diese permanente Drehverbindung 11 ist als Steckverzahnung / Kerbverzahnung ausgebildet. Somit ist im Betrieb der Rotorträger 10 bzw. der erste Kupplungsbestandteil 12 der jeweiligen Teilkupplung 13, 25 dauerhaft drehfest mit dem zweiten Drehteil 6 und somit im Betrieb mit einer Ausgangswelle (Kurbelwelle) der Brennkraftmaschine drehgekoppelt. Eine separate Trennkupplung, mit der es möglich ist, den ersten Drehteil 5 von dem Rotorträger 10 zu entkoppeln, ist nicht vorhanden. Folglich geht der Rotorträger 10 eine permanente Drehverbindung mit dem Drehschwingungsdämpfer 7 ein.

Der Rotorträger 10 ist mittels zweier Wälzlager 26 relativ zu dem Modulgehäuse 21 drehbar gelagert. Die beiden Wälzlager 26 sind gemeinsam als Doppelkugellager, nämlich als ein doppeltes Schrägkugellager ausgebildet.

Zur Detektion der im Betrieb vorliegenden Drehstellung des Rotorträgers 10 relativ zu dem Modulgehäuse 21 ist ein Rotorlagesensor 16 vorgesehen. Der Rotorlagesensor 16 ist an dem Modulgehäuse 21 angebracht und wirkt mit einem drehfest mit dem Rotorträger 10 verbundenen Geber 27 derart zusammen, dass er die Drehstellung des Rotorträgers 10 im Betrieb erfasst. Des Weiteren, hier jedoch der Übersichtlichkeit halber nicht weiter dargestellt, ist ein Temperatursensor im Inneren des Modulgehäuses 21 angeordnet.

Zum Betätigen der jeweiligen Teilkupplung 13 und 25 ist ein fluidisches (hier hydraulisches, alternativ pneumatisches) Betätigungssystem vorhanden. Dieses Betätigungssystem 28 weist je Teilkupplung 13, 25 einen ersten Kolben 29a (erster Betätigungskolben) bzw. einen zweiten Kolben 29b (zweiter Betätigungskolben) auf. Der erste Kolben 29a wirkt mit einem ersten Stellelement 30a in Form eines Drucktopfes zusammen, das wiederum unmittelbar auf die Reibelemente 36 der ersten Teilkupplung 13 verschiebend einwirkt und somit die erste Teilkupplung 13 zwischen ihrer eingekuppelten und ausgekuppelten Stellung verstellt. Ein zweites Stellelement 30b in Form eines Drucktopfes ist mit dem zweiten Kolben 29b gekoppelt und betätigt wiederum die zweite Teilkupplung 25 zwischen ihrer eingekuppelten und ausgekuppelten Stellung. Insbesondere ist das zweite Stellelement 30b einteilig mit den zweiten Kolben 29b ausgestaltet. Die beiden Drucktöpfe / Stellelemente 30a, 30n sind radial ineinander geschachtelt.

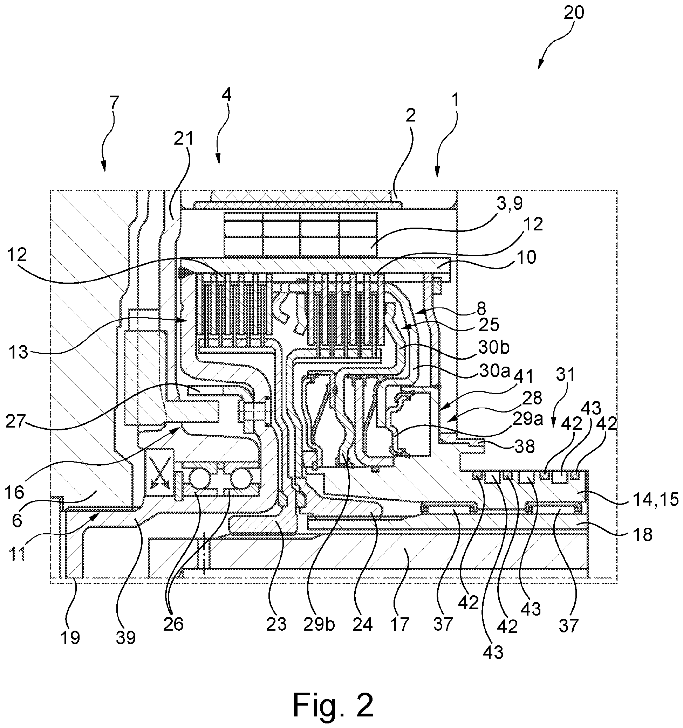

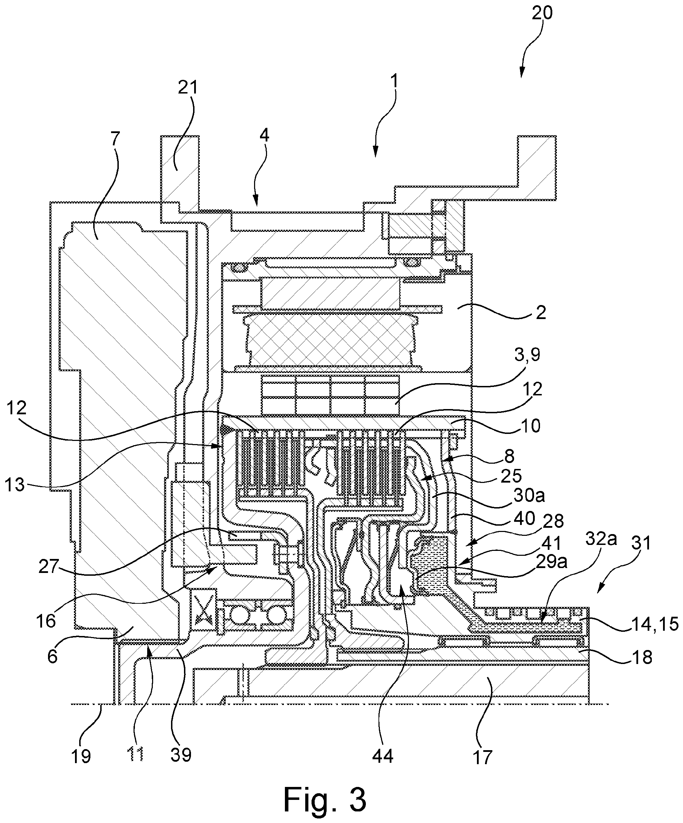

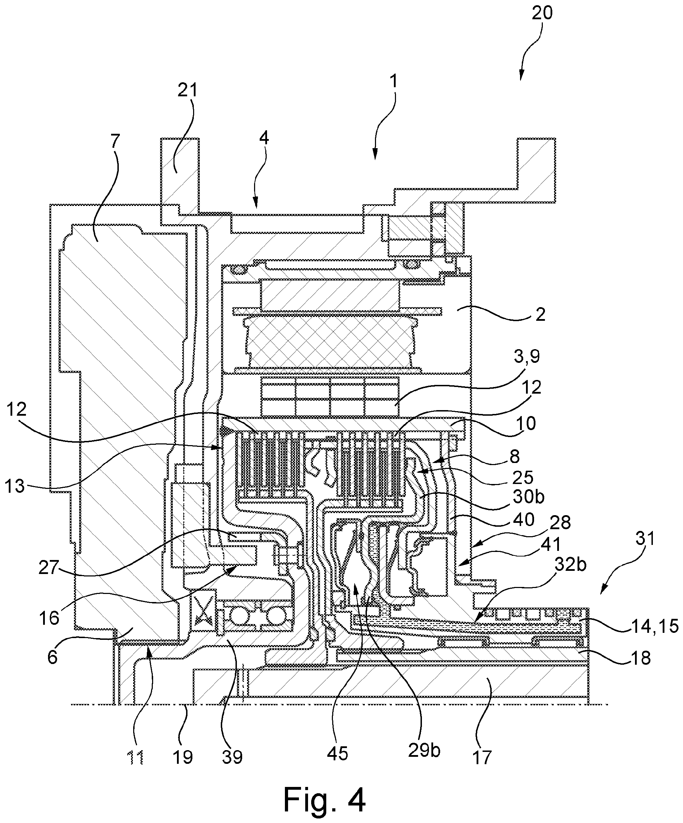

Detailliert ist das Betätigungssystem 28 in Fig. 2 erkennbar. Hierbei ist auch gut zu erkennen, dass das Betätigungssystem 28 mit einer Fluidversorgung 31 gekoppelt ist. Die Fluidversorgung 31 ist in einem zentralen Bestandteil 15, der vorzugsweise weiter relativ zu einem Gehäuse des Getriebes abgestützt / gelagert ist, vorgesehen. Somit ist der Bestandteil 15 mit dem Rotorträger 10 gekoppelt und der Rotorträger 10 über diesen Bestandteil 15 abgestützt. Insbesondere dient dieser Bestandteil 15 als Fluidverteilereinheit 14. Die Fluidversorgung 31 weist mehrere Versorgungskanäle 32a, 32b, 32c auf, die in dem gehäusefesten Bestandteil 15 eingebracht sind und voneinander unabhängig mit Druck beaufschlagbar sind. Ein erster Versorgungskanal 32a, wie in Fig. 3 zu erkennen, dient in seinem mit Druck beaufschlagten Zustand zum Betätigen und somit Einrücken der ersten Teilkupplung 13. Hierbei wird ein entsprechender Druckraum am Kolben 29a befüllt. Ein zweiter Versorgungskanal 32b, wie in Fig. 4 ersichtlich, dient in seinem mit Druck beaufschlagten Zustand zum Betätigen und somit Einrücken der zweiten Teilkupplung 14. Hierbei wird ein entsprechender Druckraum am Kolben 29b befüllt.

Ein an dem Bestandteil 15 ausgebildetes Zahnrad 38 dient im Betrieb zum Antrieb einer Fluid- bzw. Ölpumpe und ist mit dem Rotorträger 10 verbunden.

Auch ist durch diese Ausbildung der Rotorträger 10 in axialer Richtung der Doppelkupplung 8 gesehen an zwei entgegengesetzten axialen Seiten gelagert. Der Bestandteil 5 ist zu diesem Zwecke über weitere zweite Wälzlager 37 relativ zu der zweiten Getriebeeingangswelle 18 gelagert.

Bevorzugt ist die Fluidversorgung 31 / Fluidverteilereinheit 14 separat steuerbar. Das heißt, dass die Fluidverteilereinheit 14 insbesondere separat von einer Motorkühlung der Brennkraftmaschine steuerbar ist.

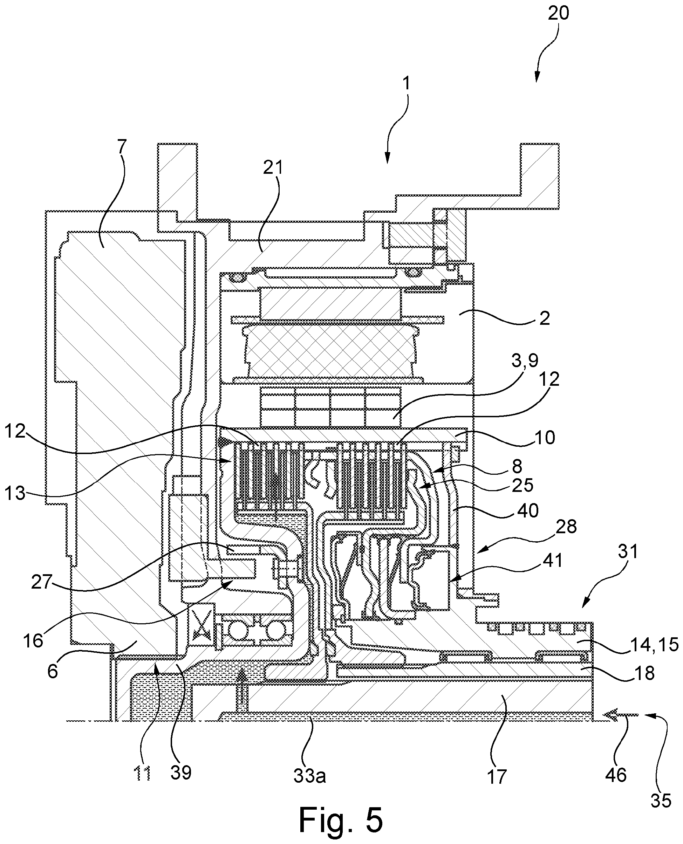

Des Weiteren ist in dem Hybridmodul 1 eine durch eine Kühleinrichtung 35 umgesetzte Fluidkühlung vorgesehen. Diese dient dazu, die Teilkupplungen 13, 25 (insbesondere die Reibelemente 36) im Betrieb mit einem Kühlfluidstrom zu umströmen. Gemäß Fig. 5 ist ein erster Kühlkanal 33a dieser Kühleinrichtung 35 durch eine in axialer Richtung (entlang der Drehachse 19) verlaufende Bohrung in der ersten Getriebeeingangswelle 17, einer darin anschließende, in radialer Richtung verlaufende zweite Bohrung sowie einem Zwischenraum zwischen dem zweiten Kupplungsbestandteil 23 und dem Rotorträger 10 ausgebildet. Dadurch wird ein erster Kühlfluidstrom von einem radial innenliegenden Bereich an der ersten Getriebewelle 17 in radialer Richtung nach außen zu den Reibelementen 36 der ersten Teilkupplung 13 hin geleitet.

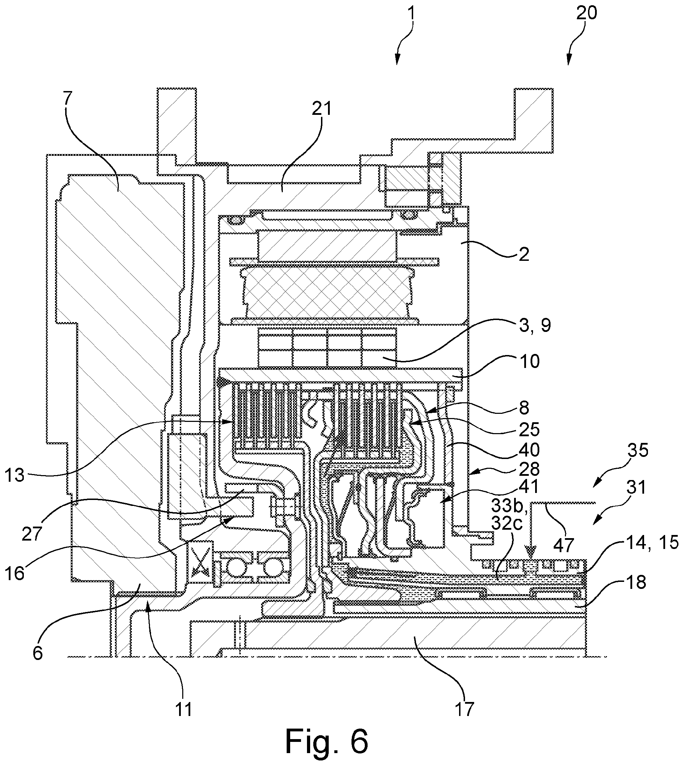

Gemäß Fig. 6 ist ein zweiter Kühlkanal 33b der Kühleinrichtung 35 in der Fluidverteilereinheit 14 mit umgesetzt. Der zweite Kühlkanal 33b ist somit ein dritter Versorgungskanal 32c der Fluidverteilereinheit 14. Hierfür ist in dem zentralen Bestandteil 15 ein eigener Kanal vorgesehen, der aus mehreren Bohrungen ausgebildet ist und in einem Innenraum des Hybridmoduls 1 einmündet. Ein erster Abschnitt des zweiten Kühlkanals 33b ist daher unmittelbar in dem zentralen Bestandteil 15 ausgebildet. An diesen ersten Abschnitt schließt ein zweiter Abschnitt des zweiten Kühlkanals 33b an, der durch einen Zwischenraum zwischen dem zweiten Kupplungsbestandteil 24 und dem zweiten Kolben 29b ausgebildet ist und in radialer Richtung nach außen verläuft. Durch den zweiten Kühlkanal 33b wird im Betrieb wiederum ein zweiter Kühlfluidstrom dem Hybridmodul 1 zugeführt, der von der radialen Innenseite seitens des zentralen Bestandteils 15 hin zu den Reibelementen 36 der zweiten Teilkupplung 25 strömt. Da die Fluidkühlung als Hydraulikkühlung umgesetzt ist, ist die Doppelkupplung 8 in diesem Ausführungsbeispiel insbesondere hydraulisch gekühlt. Es sind jedoch auch Ausführungen mit pneumatischer Kühlung umsetzbar.

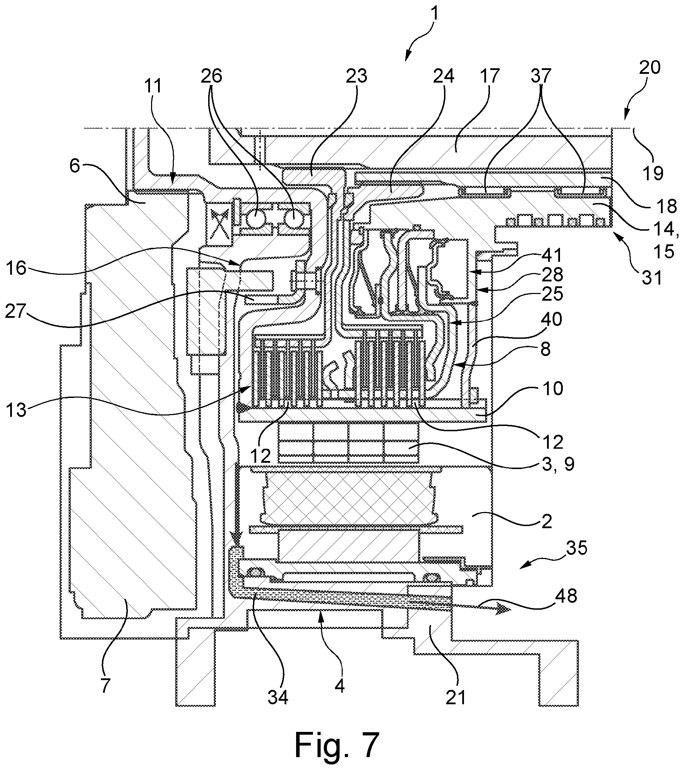

Des Weiteren ist in Fig. 7 zu erkennen, dass auch die elektrische Maschine 4, insbesondere im Bereich des Stators 2 fluidgekühlt, nämlich vorzugsweise hydraulisch / flüssigkeitsgekühlt ausgeführt ist. Ein Kühlfluidstrom wird in einer radialen Richtung gezielt an dem Stator 2 vorbeigeleitet und radial außerhalb des Stators 2 durch einen einen Fluidrücklauf ausbildenden Abführkanal 34 aus dem Inneren des Modulgehäuses 21 abgeleitet. Dadurch wird der Stator 2 im Betrieb durch die Kühleinrichtung 35 mit gekühlt. Der Abführkanal 34 ist teilweise in dem Modulgehäuse 21 angebracht. Alternativ oder zusätzlich ist die elektrische Maschine 4 (insbesondere der Stator 2) in einer weiteren Ausführung über einen zusätzlichen Kühlkreislauf, vorzugsweise einen Wasserkühlkreislauf, gekühlt.

In anderen Worten ausgedrückt, sind somit einige Aspekte des erfindungsgemäßen Hybridmoduls 1:
- P1-Hybridmodul 1 (ohne Trennkupplung) mit fluid- / ölgekühlter Doppelkupplung 8
- wassergekühlte E-Maschine 4
- Einsatz eines Bogenfederdämpfers 7 mit Fliehkraftpendel zur Schwingungsisolation
- beidseitige Lagerung des Rotorträgers 10
- radial ineinander geschachtelte Drucktöpfe
- Integration eines Betätigungs-Kolbens 29a, 29b in eine Fluid- bzw. Öl-Verteilereinheit 14, die gleichzeitig den Rotorträger 10 lagert
- separat steuerbare Kupplungskühlung 35
- Ölrücklauf in Gehäuse integriert
- integrierte Rotorlage- und Temperatursensoren 16
- Betriebsspannung von 48 Volt

Fig. 1 zeigt eine Darstellung eines Hybridmoduls 1 in einem Hauptschnitt. Ein Hybridmodul 1 ist zwischen einem Verbrennungsmotor und einem Doppelkupplungsgetriebe positioniert. Ein Torsionsschwingungsdämpfer (Drehschwingungsdämpfer 7) als Kombination aus einem Bogenfederdämpfer und einem drehzahladaptivem Tilger ist an eine Kurbelwelle geschraubt und überträgt ein Motormoment auf eine Rotoreinheit des Hybridmoduls 1 über eine Steckverzahnung. Das Hybridmodul 1 besitzt ein Gehäuse (Modulgehäuse 21), in dem der Stator 2 einer wassergekühlten E-Maschine 4 mittels Schrauben montiert ist. Der Rotor 3 der E-Maschine 4 ist auf einer Rotoreinheit drehfest fixiert. Innerhalb dieser Rotoreinheit ist eine fluid- bzw. ölgekühlte Doppelkupplung 8, bestehend aus Teilkupplungen 13 und 25 integriert. Die Rotoreinheit ist beidseitig über Wälzlager 26 in dem Gehäuse 21 und über Wälzlager 37 auf einer Hohlwelle 18 gelagert. Ein Rotorlagesensor 16 und nicht dargestellte Temperatursensoren können in das Gehäuse 21 integriert sein. Dieses ist fluid- bzw. öldicht gegenüber der Umwelt abgedichtet und nur zu dem Getriebe hin geöffnet. Ein Zahnrad 38 kann zum Antrieb einer Fluid- bzw. Ölpumpe mit der Rotoreinheit verbunden sein.

Fig. 2 zeigt eine Darstellung eines vergrößerten Ausschnitts des Hybridmoduls 1. Eine Eingangswelle 39 ist mit einem Rotorträger 10 einteilig oder mehrteilig (z.B. durch Schweißen) verbunden. Eine Fluid- bzw. Ölverteilereinheit 14 ist mit einem Flansch 40 ein- oder mehrteilig verbunden und bildet mit dem Rotorträger 10 und der Eingangswelle 39 die Rotoreinheit. An dieser ist auch ein Geberring 27 des Rotorlagesensors 16 drehfest befestigt. Außenlamellen 36 der Doppelkupplung 8 sind drehfest und axial verschiebbar in dem Rotorträger 10 gelagert. Innenlamellen 37 sind drehfest und axial verschiebbar mit Naben 23, 24 verbunden, die über Steckverzahnungen mit einer Vollwelle 17 bzw. einer Hohlwelle 18 der beiden Teilgetriebe des Doppelkupplungsgetriebes verbunden sind. Ineinander geschachtelte und zueinander abgedichtete Drucktöpfe 30a, 30b übertragen Axialkräfte von Kolben 29a, 29b auf jeweilige Lamellenpakete 36. Die Fluid- bzw. Ölverteilereinheit 14 besitzt einen Zylinder 41 zur Betätigung einer Kupplung 13, über Kolbenringe 42 abgedichtete Drehdurchführungen 43 und Verteilerbohrungen zum Ansteuern und Kühlen der Kupplungen 13, 25. Auf ihr ist ein Stützring 43 in mindestens eine Richtung axial fest und abgedichtet befestigt, der einen Druck eines Zylinders 41 einer Kupplung 25 aufnimmt.

Fig. 3 zeigt eine Darstellung einer Betätigung einer ersten Teilkupplung 13 des Hybridmoduls 1. Über einen Kanal 32a wird Drucköl bzw. -fluid in die Fluid- bzw. Ölverteilereinheit 14 gebracht, die dieses über Bohrungen in den Zylinder 41 leitet. Ein Ausgleichszylinder 44 sorgt für eine nötige Druckkompensation unter Drehzahl. In diesem ist auch eine Rückstell-Tellerfeder zum Zurückschieben eines Kolbens 29a und damit zum Öffnen der Kupplung 13 integriert.

Fig. 4 zeigt eine Darstellung einer Betätigung einer zweiten Teilkupplung 25 des Hybridmoduls 1. Über einen Kanal 32b wird Drucköl bzw. -fluid in die Fluid- bzw. Ölverteilereinheit 14 gebracht, die dieses über Bohrungen in den Zylinder 41 leitet. Ein Ausgleichszylinder 45 sorgt für eine nötige Druckkompensation unter Drehzahl. In diesem ist auch eine Rückstell-Tellerfeder zum Zurückschieben eines Kolbens 29b und damit zum Öffnen der Kupplung 25 integriert.

Fig. 5 zeigt eine Darstellung einer Kühlung der ersten Teilkupplung 13 des Hybridmoduls 1. Über Drehdurchführungen wird Kühlöl bzw. -fluid 46 in die Vollwelle 17 und über Queröffnungen in dieser und in entsprechenden Anlaufscheiben in die Kupplung 13 geführt.

Fig. 6 zeigt eine Darstellung einer Kühlung der zweiten Teilkupplung 25 des Hybridmoduls 1. Über Drehdurchführungen wird Kühlöl bzw. -fluid 47 in die Fluid- bzw. Ölverteilereinheit 14 und über Bohrungen und Queröffnungen in entsprechenden Anlaufscheiben in die Kupplung 25 geführt.

Fig. 7 zeigt eine Darstellung eines Abflusses eines Kühlöls bzw. -fluids für die erste und die zweite Teilkupplung 13, 25 des Hybridmoduls 1. Das Kühlöl bzw. -fluid 48 sammelt sich in einem Sumpf in einem Bereich der E-Maschine 4. Zur Abfuhr ist mindestens eine Öffnung vorgesehen, die dieses in den Sumpf des Getriebes weiterleitet. Somit wird eine Überflutung der E-Maschine 4 verhindert.

Obgleich die vorliegende Erfindung vorhergehend anhand eines Ausführungsbeispiels beschrieben worden ist, versteht es sich, dass verschiedene Ausgestaltungen und Änderungen durchgeführt werden können, ohne den Umfang der vorliegenden Erfindung zu verlassen, wie er in den beiliegenden Ansprüchen definiert ist. Bezüglich weiterer Merkmale und Vorteile der vorliegenden Erfindung wird ausdrücklich auf die Offenbarung der Zeichnung verwiesen.

### Bezugszeichenliste

- 1: Hybridmodul
- 2: Stator
- 3: Rotor
- 4: elektrische Maschine
- 5: erstes Drehteil
- 6: zweites Drehteil
- 7: Drehschwingungsdämpfer
- 8: Kupplungseinrichtung / Doppelkupplung
- 9: Rotorspule
- 10: Rotorträger
- 11: Drehverbindung
- 12: erster Kupplungsbestandteil
- 13: erste Teilkupplung
- 14: Fluidverteilereinheit
- 15: zentraler Bestandsteil
- 16: Rotorlagesensor
- 17: erste Getriebeeingangswelle
- 18: zweite Getriebeeingangswelle
- 19: Drehachse
- 20: Antriebsstrang
- 21: Modulgehäuse
- 22: Hülsenbereich
- 23: zweiter Kupplungsbestandteil der ersten Teilkupplung
- 24: zweiter Kupplungsbestandteil der zweiten Teilkupplung
- 25: zweite Teilkupplung
- 26: Wälzlager
- 27: Geber
- 28: Betätigungssystem
- 29a: erster Kolben
- 29b: zweiter Kolben
- 30a: erstes Stellelement
- 30b: zweites Stellelement
- 31: Fluidversorgung
- 32a: erster Versorgungskanal
- 32b: zweiter Versorgungskanal
- 32c: dritter Versorgungskanal
- 33a: erster Kühlkanal
- 33b: zweiter Kühlkanal
- 34: Abführkanal
- 35: Kühleinrichtung
- 36: Reibelement
- 37: zweite Wälzlager
- 38: Zahnrad
- 39: Eingangswelle
- 40: Flansch
- 41: Zylinder
- 42: Kolbenring
- 43: Stützring
- 44: Ausgleichszylinder des ersten Kolbens
- 45: Ausgleichszylinder des zweiten Kolbens
- 46: erster Bezugspfeil
- 47: zweiter Bezugspfeil
- 48: dritter Bezugspfeil

## Patentansprüche

1. Hybridmodul (1) für einen Antriebsstrang eines Kraftfahrzeuges, mit einer einen Stator (2) und einen Rotor (3) aufweisenden elektrischen Maschine (4), einem zumindest ein Drehteil (6) aufweisenden Drehschwingungsdämpfer (7), sowie einer integrierten und als Doppelkupplung ausgebildeten Kupplungseinrichtung (8), wobei ein den Rotor (3) aufnehmender Rotorträger (10) einen Kupplungsbestandteil (12) zumindest einer Teilkupplung (13) der Kupplungseinrichtung (8) ausbildet, **dadurch gekennzeichnet, dass** der Rotorträger (10) direkt über eine permanente Drehverbindung (11) mit dem zumindest einen Drehteil (6) verbunden ist.

2. Hybridmodul (1) nach Anspruch 1, **dadurch gekennzeichnet, dass** der Drehschwingungsdämpfer (7) ein, eine Primärmasse ausbildendes, erstes Drehteil (5) sowie ein, eine Sekundärmasse ausbildendes, zweites Drehteil (6) aufweist, wobei die beiden Drehteile (5, 6) relativ zueinander um einen bestimmten Verstellbereich verdrehbar sind und die Drehverbindung (11) zwischen dem zweiten Drehteil (6) sowie dem Rotorträger (10) ausgebildet ist.

3. Hybridmodul (1) nach Anspruch 2, **dadurch gekennzeichnet, dass** das erste Drehteil (5) zum drehfesten Anbringen an einer Ausgangswelle einer Brennkraftmaschine vorbereitet ist, sodass durch den Rotorträger (10) über das erste Drehteil (5) sowie das zweite Drehteil (6) ein Drehmoment von der Brennkraftmaschine aufnehmbar ist.

4. Hybridmodul (1) nach einem der Ansprüche 1 bis 3, **dadurch gekennzeichnet, dass** der Drehschwingungsdämpfer (7) durch Kombination eines Bogenfederdämpfers und eines drehzahladaptiven Tilgers ausgebildet ist.

5. Hybridmodul(1) nach einem der Ansprüche 1 bis 4, **dadurch gekennzeichnet, dass** die elektrische Maschine (4) fluidgekühlt ist.

6. Hybridmodul (1) nach einem der Ansprüche 1 bis 5, **dadurch gekennzeichnet, dass** die Drehverbindung (11) als eine Steckverzahnung ausgebildet ist.

7. Hybridmodul (1) nach einem der Ansprüche 1 bis 6, **dadurch gekennzeichnet, dass** die Doppelkupplung (8) fluidgekühlt ausgebildet ist, wobei eine Fluidverteilereinheit (14) vorhanden ist, die zum Lagern des Rotorträgers (10) dient.

8. Hybridmodul (1) nach einem der Ansprüche 1 bis 7, **dadurch gekennzeichnet, dass** die Doppelkupplung (8) mit einer separat steuerbaren Fluidkühlung versehen ist.

9. Hybridmodul (1) nach einem der Ansprüche 1 bis 8, **dadurch gekennzeichnet, dass** ein eine Drehstellung des Rotors (3) erfassender Rotorlagesensor (16) und/oder ein Temperatursensor vorgesehen sind/ist.

10. Antriebsstrang (20) für ein Kraftfahrzeug, mit einem Hybridmodul (1) nach einem der Ansprüche 1 bis 9 sowie einer Brennkraftmaschine, wobei eine Ausgangswelle der Brennkraftmaschine drehfest mit dem Drehschwingungsdämpfer (7) verbunden ist.

## Claims

1. A hybrid module (1) for a drive train of a motor vehicle, with an electric machine (4) having a stator (2) and a rotor (3), a torsional vibration damper (7) having at least one rotational part (6), and an integrated clutch device (8) which is configured as a double clutch, wherein a rotor carrier (10) which receives the rotor (3) forms a clutch constituent part (12) of at least one component clutch (13) of the clutch device (8), **characterised in that** the rotor carrier (10) is directly connected to the at least one rotational part (6) via a permanent rotary connection (11).

2. The hybrid module (1) according to claim 1, **characterised in that** the torsional vibration damper (7) has a first rotational part (5) which forms a primary mass and a second rotational part (6) which forms a secondary mass, wherein the two rotational parts (5, 6) are rotatable relative to one another by a certain adjustment range and the rotary connection (11) is formed between the second rotational part (6) and the rotor carrier (10).

3. The hybrid module (1) according to claim 2, **characterised in that** the first rotational part (5) is prepared for non-rotatable attachment to an output shaft of an internal combustion engine, so that a torque can be received by the internal combustion engine through the rotor carrier (10) via the first rotational part (5) and the second rotational part (6).

4. The hybrid module (1) according to any one of claims 1 to 3, **characterised in that** the torsional vibration damper (7) is formed by a combination of an arc spring damper and a speed-adaptive mass damper.

5. The hybrid module (1) according to any one of claims 1 to 4, **characterised in that** the electric machine (4) is fluid-cooled.

6. The hybrid module (1) according to any one of claims 1 to 5, **characterised in that** the rotary connection (11) is configured as a spline toothing.

7. The hybrid module (1) according to any one of claims 1 to 6, **characterised in that** the double clutch (8) is designed to be fluid-cooled, wherein a fluid distribution unit (14) is provided which serves for supporting the rotor carrier (10).

8. The hybrid module (1) according to any one of claims 1 to 7, **characterised in that** the double clutch (8) is provided with a separately controllable fluid cooling.

9. The hybrid module (1) according to any one of claims 1 to 8, **characterised in that** a rotor position sensor (16) that detects a rotational position of the rotor (3) and/or a temperature sensor is/are provided.

10. A drive train (20) for a motor vehicle, with a hybrid module (1) according to any one of claims 1 to 9 and an internal combustion engine, wherein an output shaft of the internal combustion engine is non-rotatably connected to the torsional vibration damper (7).

## Revendications

1. Module hybride (1) pour une chaîne cinématique d'un véhicule automobile, avec une machine électrique (4) comportant un stator (2) et un rotor (3), un amortisseur de vibrations de torsion (7) comportant au moins une partie rotative (6) et un dispositif d'embrayage (8) intégré et conçu comme un double embrayage, un support de rotor (10) recevant le rotor (3) formant un élément d'embrayage (12) d'au moins un embrayage partiel (13) du dispositif d'embrayage (8), **caractérisé en ce que** le support de rotor (10) est directement relié à la au moins une partie rotative (6) au moyen d'un liaison rotative (11).

2. Module hybride (1) selon la revendication 1, **caractérisé en ce que** l'amortisseur de vibrations de torsion (7) présente une première partie rotative (5) qui forme une masse primaire et une seconde partie rotative (6) qui forme une masse secondaire, les deux parties rotatives (5, 6) pouvant tourner l'une par rapport à l'autre selon une certaine plage de réglage et la liaison rotative (11) étant formée entre la seconde partie rotative (6) et le support de rotor (10).

3. Module hybride (1) selon la revendication 2, **caractérisé en ce que** la première partie rotative (5) est préparée pour une fixation solidaire en rotation à un arbre de sortie d'un moteur à combustion interne, de sorte qu'un couple peut être absorbé par le moteur à combustion interne par le support de rotor (10) via la première partie rotative (5) et la seconde partie rotative(6).

4. Module hybride (1) selon l'une des revendications 1 à 3, **caractérisé en ce que** l'amortisseur de vibrations de torsion (7) est formé par une combinaison d'un amortisseur à ressort en arc et d'un absorbeur de vibrations adaptatif à la vitesse de rotation.

5. Module hybride (1) selon l'une quelconque des revendications 1 à 4, **caractérisé en ce que** la machine électrique (4) est refroidie par fluide.

6. Module hybride (1) selon l'une quelconque des revendications 1 à 5, **caractérisé en ce que** la liaison rotative (11) est formée comme une cannelure.

7. Module hybride (1) selon l'une quelconque des revendications 1 à 6, **caractérisé en ce que** le double embrayage (8) est conçu pour être refroidi par fluide, une unité de distribution de fluide (14) étant présente et servant au montage du support de rotor (10).

8. Module hybride (1) selon l'une quelconque des revendications 1 à 7, **caractérisé en ce que** le double embrayage (8) est muni d'un refroidissement par fluide contrôlable séparément.

9. Module hybride (1) selon l'une quelconque des revendications 1 à 8, **caractérisé en ce qu'**un capteur de position de rotor (16) qui détecte une position de rotation du rotor (3) et/ou un capteur de température est/sont prévus.

10. Chaîne cinématique (20) pour un véhicule à moteur, avec un module hybride (1) selon l'une quelconque des revendications 1 à 9 et un moteur à combustion interne, un arbre de sortie du moteur à combustion interne étant relié de manière solidaire en rotation à l'amortisseur de vibrations de torsion (7).
